# EUROPÄISCHE PATENTSCHRIFT

(11) **EP 0 482 332 B1**
(45) Veröffentlichungstag und Bekanntmachung des Hinweises auf die Patenterteilung: **11.08.1993**
(21) Anmeldenummer: 91115245.2
(22) Anmeldetag: 10.09.1991
(51) Int. Cl.: C02F 3/20, B01F 3/04

(54) **Vorrichtung zur Injektion von Druckluft in eine Flüssigkeit**
Process for injecting compressed air into a liquid
Procédé pour injecter de l'air comprimé dans un liquide

(30) Priorität: 24.10.1990 DE 4033814; 03.12.1990 DE 4038504
(43) Veröffentlichungstag der Anmeldung: 29.04.1992
(73) Patentinhaber: Schreiber, Berthold, Dipl.-Ing, D-30419 Hannover (DE); Schreiber, Erhard, Dipl.-Ing., D-30853 Langenhagen (DE)
(72) Erfinder: Schmidt, Hans, W-3384 Liebenburg 1 (DE)
(74) Vertreter: Arendt, Helmut, Dipl.-Ing.

(56) Entgegenhaltungen:
- DE-A- 3 319 161
- DE-A- 3 418 548
- DE-A- 3 624 580
- DE-A- 3 639 473

## Beschreibung

Die Erfindung betrifft eine Vorrichtung zur Injektion von Druckluft in eine Flüssigkeit, insbesondere Abwasser, mit einem rohrförmigen Grundkörper, der mit einer elastischen perforierten Membran umgeben ist, durch deren Perforation bei Beaufschlagung über eine oder mehrere radiale Öffnungen im Grundkörper die Druckluft feinperlig in die Flüssigkeit verteilt wird und im nicht beaufschlagten Zustand den Grundkörper eng umschließt, so daß keine Flüssigkeit in den Grundkörper eindringt, und mit einem Verbindungselement, welches den Grundkörper mit einem Druckluftzuführungsrohr verbindet und trägt.

Belüftungsvorrichtungen der vorgenannten Art sind beispielsweise durch die DE-A-33 19 161 oder DE-A-38 19 305 bekannt, bei welchen vorkammerartige Gas- bzw. Drucklufträume und von diesen getrennte sogenannte Fluträume vorgesehen sind, die durch die umgebende Flüssigkeit flutbar sind. Die Gas- bzw. Drucklufträume sind von den Fluträumen durch unterschiedliche Mittel, beispielsweise eingefügte Zwischenwände oder solche Wände getrennt, die mit den Grundkörpern aus einem Teil bestehen. Es hat sich gezeigt, daß die bekannten Ausführungen für den Einsatz bei Abwasserreinigungsanlagen mechanisch nicht robust genug sind sondern häufig Schäden im Trennwandbereich zeigen. Sie sind für den praktischen Dauereinsatz nicht geeignet. Durch die Unterteilung des Grundkörpers in mehrere Kammern ist der Herstellungsaufwand für die bekannten Belüftungsvorrichtungen recht hoch. Durch Trennwände entstehende sackförmige Fluträume bilden Totzonen, in denen kein Flüssigkeitsaustausch stattfindet.

Der Erfindung liegt die Aufgabe zu Grunde, eine Belüftungsvorrichtung der eingangs genannten Art zu schaffen, deren tragende Verbindung zwischen dem Grundkörper und dem Druckluftzuführungsrohr wesentlich stabiler ist als bei den bekannten Konstruktionen und die Gesamtausführung wesentlich einfacher und dadurch kostengünstiger herstellbar ist.

Die erfindungsgemäße Ausführung zur Lösung dieser Aufgabe zeichnet sich dadurch aus, daß der Grundkörper aus einem handelsüblichen Rohrabschnitt mit einem Befestigungselement und wenigstens einer radialen Luftdurchtrittsöffnung besteht, wobei als Verbindungselement zwischen dem Grundkörper und dem Druckluftzuführungsrohr ein Tragkörper mit wenigstens einer axial gerichteten Luftzuführungsnut dient, welcher mit einem Ende in das Druckluftzuführungsrohr reicht und mit seinem freien Ende tragend und gegen die Flüssigkeit dichtend in den Grundkörper greift. Weitere, den Erfindungsgegenstand vorteilhaft gestaltende Merkmale sind in den Unteransprüchen angegeben.

Die erfindungsgemäße Gestaltung von Grundkörper und Verbindungselement und deren Zusammenwirken reduziert den Grundkörper im Gegensatz zu den bekannten Ausführungen auf ein einfaches, handelsübliches Rohr ohne weitere Einbauten. Besonders vorteilhaft ist im Gegensatz zu den bekannten, wenig haltbaren Ausführungen die durch die erfindungsgemäße Gestaltung mit größtmöglichem Gewindedurchmesser erreichbare hohe Haltbarkeit der Befestigung zwischen Grundkörper und Verbindungselement. Die Befestigung ist durch die Gewindelänge und die Bemessung des Gewindedurchmessers an alle in der Praxis auftretenden Belastungen anpaßbar. Die Funktionen Druckluftzuführung zu den radialen Druckluftaustrittsöffnungen des Grundkörpers, Abdichten zwischen dem Druckluft- und Flüssigkeitsbereich, Verbinden und Tragen zweier paarweise angeordneter Grundkörper mit gemeinsamer Achse und Verbinden der Fluträume zweier paarweise angeordneter Grundkörper miteinander können durch ein kombiniertes Verbindungselement erfüllt werden. Dieses ist als einstückiges Bauteil ausgebildet und z.B. durch Spritzgießen kostengünstig herstellbar. Ein weiterer Vorteil der Erfindung ist das auftriebslose Verhalten der Belüftungsvorrichtung durch das Fehlen von gas- bzw. luftgefüllten Vorkammern oder Abteilen.
Verfahrenstechnisch vorteilhaft bei der erfindungsgemäßen Ausführung ist die von der Flüssigkeit durchströmbare Verbindung der Fluträume zweier paarweise angeordneter Grundkörper durch das Verbindungselement, wodurch ein selbständiger Flüssigkeitsaustausch ermöglicht und damit unerwünschte mikrobiologische Reaktionen vermieden werden, wie sie in Flüssigkeitstotzonen bekannter Belüftungseinrichtungen entstehen können. Eine vollständige Durchflutung ist aber auch bei einer Ausführung nur mit einseitig an einem Druckluftzuführungsrohr bzw. Tragelement angeordneten Grundkörpern möglich, sofern das den Grundkörper tragende hohle Verbindungselement mit seinem, dem Grundkörper abgewandten Ende an dem Druckluftzuführungsrohr gegen die umgebende Flüssigkeit dichtend befestigt ist.
Gemäß einem weiteren vorteilhaften Merkmal ist das Verbindungselement als einseitig geschlossene Hülse ausgebildet und sowohl mit einem Außengewinde zum Einschrauben in den Grundkörper als auch mit einem Innengewinde zum Aufschrauben auf einen Rohrnippel des Druckluftzuführungsrohres versehen, wobei das Verbindungselement einen Bund aufweist, der dichtend an der Stirnwand des Grundkörpers anliegt. Dadurch ist es möglich, den beschriebenen rohrförmigen Grundkörper unverändert und somit als Standardgrundkörper auch für handelsübliche Druckluftzuführungs- und Tragelemente, die mit üblichen Rohrnippeln ausgerüstet sind, einzusetzen. Zur Weiterleitung der Druckluft vom Druckluftzuführungsrohr über einen Rohrnippel in den Raum zwischen der Membran und dem Grundkörper ist das Verbindungselement mit Radialbohrungen versehen, die seinen Innenraum mit einer um seinen Außenumfang geführten Druckluftzuführungsnut verbinden. Von dort kann die Druckluft durch die Radialbohrungen des rohrförmigen Grundkörpers zur elastischen und perforierten Membran gelangen.

In der Zeichnung sind drei Ausführungsbeispiele der Erfindung dargestellt und nachstehend erläutert.

Es zeigen:
- Fig. 1: Einen Längsschnitt durch eine komplett montierte Belüftungsvorrichtung in paarweiser Anordnung der Grundkörper an einem zentralen Druckluftzuführungs- und Tragelement,
- Fig. 2: einen Detail- und Längsschnitt von Grundkörper und Verbindungselement im montierten Zustand,
- Fig. 3: einen Längsschnitt durch den Grundkörper,
- Fig. 4: das Verbindungselement,
- Fig. 5: den Querschnitt A-A durch das Verbindungselement im Bereich einer umlaufenden Druckluftzuleitungsnut,
- Fig. 6: den Querschnitt B-B durch das Verbindungselement im Bereich der axialen Druckluftzuleitungsnuten,
- Fig. 7: einen Längsschnitt durch einen einzelnen an einem Druckluftzuführungs- und Tragelement angeordneten Grundkörper mit zugehörigem Verbindungselement,
- Fig. 8: einen Schnitt durch einen an einem Rohrnippel eines Druckluftzuführungsrohres befestigten Grundkörper und
- Fig. 9: einen Längsschnitt durch das Verbindungselement gemäß Figur 8.

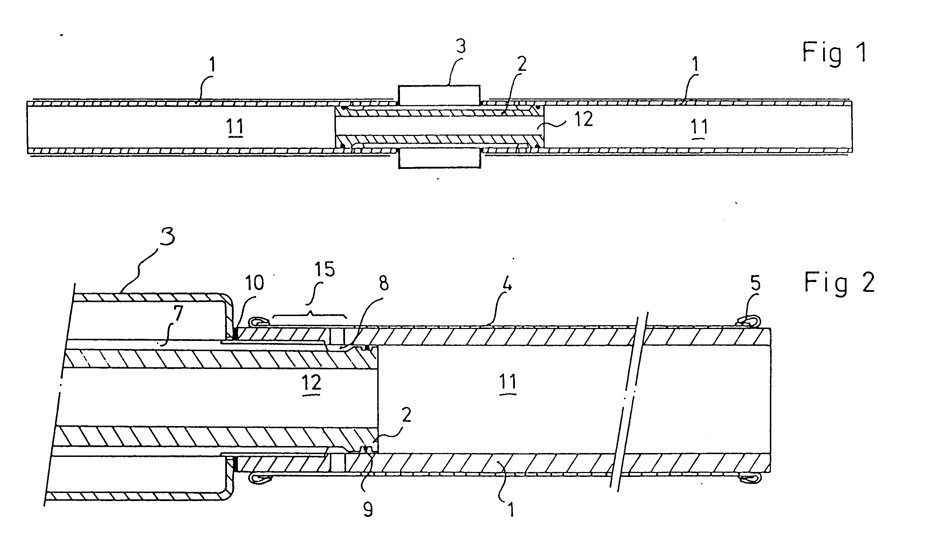

Die Figur 1 zeigt eine komplett montierte Belüftungseinrichtung mit den paarweise angeordneten Grundkörpern 1, dem gemeinsamen Verbindungselement 2 und das zentrale Druckluftzuführungs- und Tragelement 3, welches in dem dargestellten Ausführungsbeispiel als Rechteckrohr ausgebildet ist.

Der Grundkörper 1 besteht aus einem einfachen, z.B. handelsüblichen Rohr, welches an einem Ende ein Befestigungselement trägt, das zweckmäßig als Innengewinde 13 ausgebildet ist. Zum Durchtritt der Druckluft von der Rohrinnenseite unter die in Fig. 2 dargestellte elastische, perforierte Membran 4 sind in das Grundkörperrohr 1 eine oder mehrere Druckluftaustrittsöffnungen 6 eingebracht.

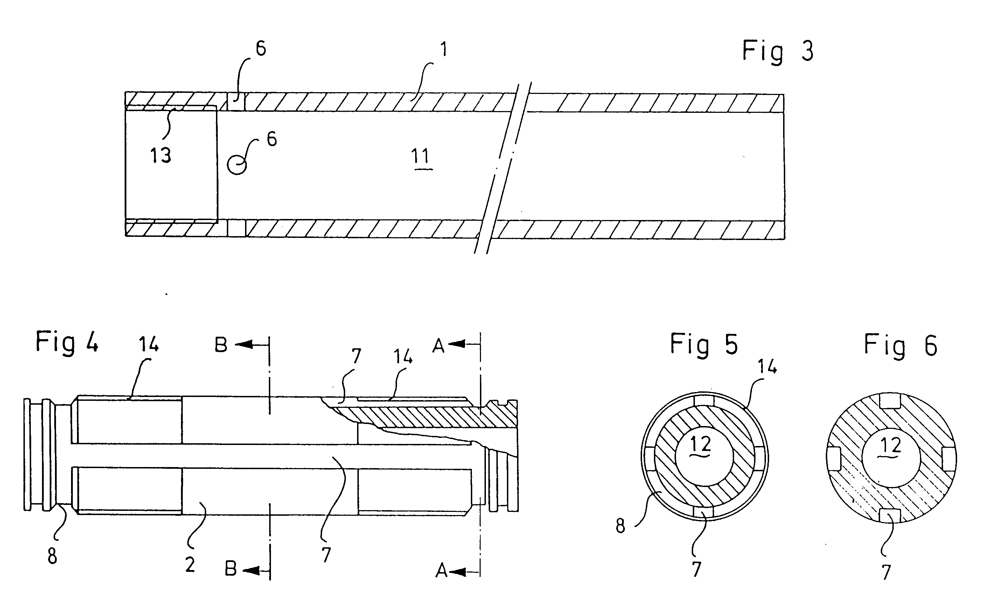

Das in Fig. 4, Fig. 5 und Fig. 6 dargestellte Verbindungselement 2 ist symmetrisch ausgebildet und trägt auf beiden Seiten je ein Außengewinde 14, auf das je ein Grundkörper mit dem Innengewinde 13 zu beiden Seiten des zentralen Druckluftzuführungs- und Tragelementes 3 aufgeschraubt ist.

Die in Fig. 2 dargestellte, perforierte Membran 4 ist durch Spannklemmen 5 auf dem Grundkörper 1 befestigt und im Bereich 15 über den Druckluftdurchtrittsöffnungen 6 unperforiert.

Die Druckluftführung vom zentralen Druckluftzuführungs- und Tragelement 3 zu den Druckluftdurchtrittsöffnungen 6 des Grundkörpers 1 erfolgt über axiale Druckluftzuleitungsnuten 7 in eine umlaufende Druckluftzuleitungsnut 8 und von dort in die Druckluftdurchtrittsöffnungen 6 unter dem unperforierten Bereich 15 der elastischen, perforierten Membran 4.

Die einströmende Druckluft bildet unter der elastischen, perforierten Membran 4 einen Blähraum, von dem sie durch die Perforation der Membran 4 in die Flüssigkeit gelangt.

Der Dichtring 9 dichtet die umlaufende Druckluftzuführungsnut 8 gegen den Flutraum 11 ab. Der Dichtring 10 dichtet die axialen Druckluftzuführungsnuten 7 gegen die umgebende Flüssigkeit ab.

Der Hohlraum 12 des Verbindungselementes 2 verbindet die Fluträume 11 der paarweise angeordneten Grundkörper 1, so daß ein Flüssigkeitsaustausch in den Fluträumen 11 selbständig stattfinden kann.

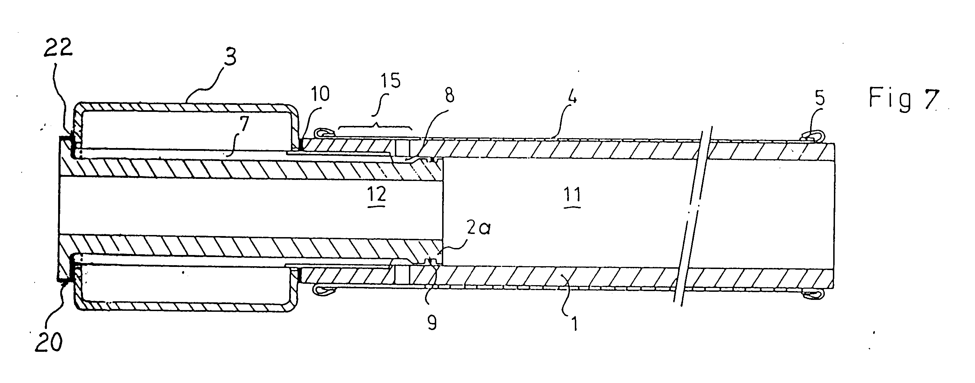

Bei der Ausführungsform gemäß Fig. 7 ist der Grundkörper 1 nur einseitig an dem Druckluftzuführungs- und Tragelement 3 befestigt. Das Verbindungselement 2a durchsetzt das Tragelement 3 und liegt an dessen, dem Grundkörper 1 abgewandten Seite durch einen Flansch oder Bund 20 an. Ein Dichtungsring 22 sorgt für die nötige Abdichtung gegen die umgebende Flüssigkeit. Auch bei diesem Ausführungsbeispiel kann die Flüssigkeit unbehindert durch den Flutungsraum 11 und den Hohlraum 12 des Verbindungselementes 2a strömen.

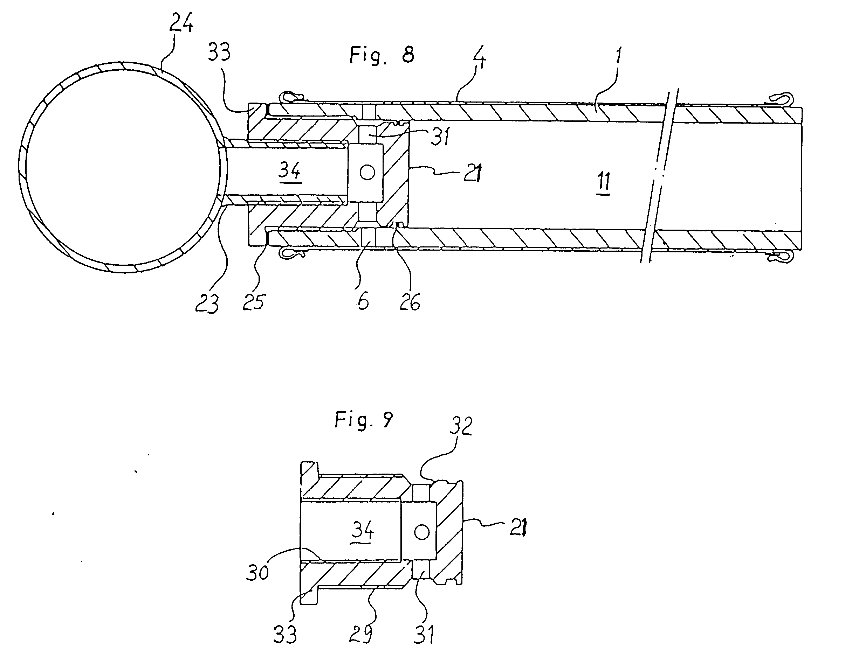

Die komplett montierte Belüftungsvorrichtung gemäß Fig. 8 zeigt die Verbindung zwischen dem rohrförmigen Grundkörper 1 über ein hülsenförmig gestaltetes Verbindungselement 21 mit dem tragenden Druckluftzuführungsrohr 24. Das Verbindungsstück 21 besteht aus einem, z.B. durch Spritzgießen kostengünstig herstellbaren Hohlkörper mit einem Außengewinde 29 und einem Innengewinde 30. Das Außengewinde 29 faßt im montierten Zustand in das korrespondierende Innengewinde 13 des rohrförmigen Grundkörpers 1. Mit dem Innengewinde 30 ist das Verbindungselement auf einen Rohrnippel 23 des Druckluftzuführungsrohres 24 schraubbar.
Der Innenraum 34 des Verbindungselementes 21 ist über Radialbohrungen 31 mit einer außenumlaufenden Druckluftzuführungsnut 32 verbunden. Das Verbindungselement ist mit einem Bund 33 versehen, der sich unter Einschluß eines Dichtringes 25 an die Stirnseite des rohrförmigen Grundkörpers 1 anlegt. Am gegenüberliegenden Ende sorgt ein Dichtring 26 für die hermetische Abdichtung des mit Abwasser gefluteten Innenraumes 11 gegen die Druckluft.

Die aus dem Druckluftzuführungsrohr 24 herangeführte Druckluft strömt durch den Rohrnippel 23 in den Innenraum des Verbindungselementes 20 und verläßt diesen über die Radialbohrungen 31. Von dort gelangt sie in eine ringförmige Nut 32, die gegen das Abwasser durch den Dichtring 26 hermetisch abgedichtet ist, um von dort über die Bohrungen 6 in den durch die perforierte Membran 4 und die Oberfläche des rohrförmigen Grundkörpers 1 gebildeten Zwischenraum zu strömen. Von dort kann die Luft fein verteilt durch die Perforation in das umgebende Abwasser gelangen.

## Patentansprüche

1. Belüftungsvorrichtung zur Injektion von Druckluft in eine Flüssigkeit, insbesondere Abwasser, mit einem rohrförmigen Grundkörper (1), welcher mit einer elastischen, perforierten Membran (4) umgeben ist, durch deren Perforation bei Beaufschlagung über eine oder mehrere radiale Öffnungen im Grundkörper die Druckluft feinperlig in die Flüssigkeit verteilt wird und im nichtbeaufschlagten Zustand den Grundkörper eng umschließt, so daß keine Flüssigkeit in den Raum zwischen der Membran und dem Grundkörper eindringt, und mit einem Verbindungselement, welches den Grundkörper mit einem Druckluftzuführungsrohr (3) verbindet und trägt, dadurch gekennzeichnet, daß der Grundkörper (1) aus einem handelsüblichen Rohrabschnitt mit einem Befestigungselement und mindestens einer radialen Luftdurchtrittsöffnung (6) besteht, wobei als Verbindungselement zwischen dem Grundkörper (1) und dem Druckluftzuführungsrohr (3) ein Tragkörper (2) vorgesehen ist, der mit einem Ende das Druckluftzuführungsrohr (3) durchsetzt und mit seinem dem Luftzuführungsrohr (3) gegenüberliegenden Ende tragend und gegen die Flüssigkeit dichtend in den Grundkörper (1) greift, wobei das Verbindungselement (2) mindestens eine axial verlaufende Luftzuführungsleitung (7) aufweist, die die Druckluft aus dem Inneren des Druckluftzuführungs- und Tragelementes (3) zu der radialen Luftaustrittsöffnung (6) des Grundkörpers (1) leitet.

2. Belüftungsvorrichtung nach Anspruch 1, dadurch gekennzeichnet, daß das Verbindungselement (2) als offener Hohlkörper ausgeführt ist, der die Fluträume (11) paarweise angeordneter Grundkörper (1) miteinander verbindet und einen einheitlichen und nach zwei Seiten offenen, von der Flüssigkeit durchströmbaren Flutraum bildet.

3. Belüftungsvorrichtung nach Anspruch 1 oder 2, dadurch gekennzeichnet, daß das Verbindungselement (2) einen in einer Ringnut eingelegten Dichtring (9) zur Abdichtung der Druckluft- gegen die Flüssigkeitszone enthält, der mit einer in axialer Richtung ausreichend langen zylindrischen Wandung des Grundkörpers (1) korrespondiert, so daß bei unterschiedlichen Einschraubtiefen des Verbindungselementes (2) in den Grundkörper (1) die Dichtwirkung erhalten bleibt.

4. Belüftungsvorrichtung nach einem der Ansprüche 1 bis 3, dadurch gekennzeichnet, daß die den Grundkörper (1) umgebende elastische Membran (4) im Bereich der radialen Luftaustrittsöffnung (6) des Grundkörpers (1) unperforiert ist.

5. Belüftungsvorrichtung nach Anspruch 4, dadurch gekennzeichnet, daß die unperforierten (15) und perforierten Zonen der elastischen Membran in axialer Richtung hintereinander angeordnet sind.

6. Belüftungsvorrichtung nach einem der Ansprüche 2 bis 5, dadurch gekennzeichnet, daß der druckluftführende Teil des Verbindungselementes (2) konzentrisch um dessen flutbaren Teil (12) herum angeordnet ist.

7. Belüftungsvorrichtung nach einem der Ansprüche 2 bis 6, dadurch gekennzeichnet, daß das flutbare Gesamtvolumen zweier paarweise angeordneter Grundkörper (1) und ihres Verbindungselements (2) zum nicht flutbaren Volumen dieser Anordnung einen Quotienten > 1,3 bildet.

8. Belüftungsvorrichtung nach einem der Ansprüche 1 bis 6, dadurch gekennzeichnet, daß zur einseitigen Befestigung von Grundkörpern (1) am druckluftführenden Tragelement (3) das Verbindungselement (2a) mit einem Flansch oder Bund (20) an der dem Grundkörper abgewandten Seite des Tragelements (3) anliegt.

9. Belüftungsvorrichtung nach einem der Anspüche 1 bis 8, dadurch gekennzeichnet, daß das Verbindungselement (20) als einseitig geschlossene Hülse ausgebildet und sowohl mit einem Außengewinde (29) zum Einschrauben in den Grundkörper (1) als auch mit einem Innengewinde (30) zum Aufschrauben auf einen Rohrnippel (23) des Druckluftzuführungsrohres (24) versehen ist und daß das Verbindungselement einen Bund (33) aufweist, der dichtend an der Stirnwand des Grundkörpers anliegt.

10. Belüftungsvorrichtung nach Anspruch 9, dadurch gekennzeichnet, daß das Verbindungselement (20) mit Radialbohrungen (31) versehen ist, die seinen Innenraum (34) mit einer um seinen Außenumfang geführten Luftdrucknut (32) verbindet.

## Claims

1. An aeration apparatus for the injection of compressed air into a liquid, in particular waste water, having a tubular basic body (1), which is surrounded by a flexible perforated membrane (4), through the perforation of which membrane the compressed air is distributed into the liquid as fine bubbles when the air is admitted via one or more radial openings in the basic body and which membrane closely envelopes the basic body when the air is not being admitted, so that no liquid penetrates into the space between the membrane and the basic body, and having a connecting element which supports the basic body and connects it to a compressed air supply pipe (3), wherein the basic body (1) comprises a commercially available pipe section with a fastening element and at least one radial air through-opening (6), a supporting body (2) being provided as connecting element between the basic body (1) and the compressed air supply pipe (3), which supporting body passes with one end through the compressed air supply pipe (3) and engages with its end opposite the air supply pipe (3) in the basic body (1), providing support and sealing the latter from the liquid, the connecting element (2) having at least one axially running air supply line (7), which conducts the compressed air from the inside of the compressed air supply and supporting element (3) to the radial air outlet opening (6) of the basic body (1).

2. The aeration apparatus as claimed in claim 1, wherein the connecting element (2) is designed as an open hollow body which connects the flooding spaces (11) of basic bodies (1) arranged in pairs to each other and forms a common flooding space which is open to two sides and through which the liquid can flow.

3. The aeration apparatus as claimed in claim 1 or 2, wherein the connecting element (2) contains a sealing ring (9), placed in an annular groove, for sealing off the compressed air zone from the liquid zone, which ring corresponds with a cylindrical wall of the basic body (1), sufficiently long in the axial direction, so that the sealing effect is retained in the case of different screwing-in depths of the connecting element (2) into the basic body (1).

4. The aeration apparatus as claimed in one of claims 1 to 3, wherein the flexible membrane (4) surrounding the basic body (1) is unperforated in the region of the radial air outlet opening (6) of the basic body (1).

5. The aeration apparatus as claimed in claim 4, wherein the unperforated (15) and perforated zones of the flexible membrane are arranged one behind the other in the axial direction.

6. The aeration apparatus as claimed in one of claims 2 to 5, wherein the compressed air conducting part of the connecting element (2) is arranged concentrically around its floodable part (12).

7. The aeration apparatus as claimed in one of claims 2 to 6, wherein the floodable overall volume of two basic bodies (1) arranged in pairs and of their connecting element (2) forms a quotient > 1.3 relative to the nonfloodable volume of this arrangement.

8. The aeration apparatus as claimed in one of claims 1 to 6, wherein, for the fastening on one side of basic bodies (1) to the compressed air conducting supporting element (3), the connecting element (2a) bears with a flange or collar (20) against the side of the supporting element (3) remote from the basic body.

9. The aeration apparatus as claimed in one of claims 1 to 8, wherein the connecting element (20) is designed as a sleeve closed at one end and is provided both with an external thread (29) for screwing into the basic body (1) and also with an internal thread (30) for screwing onto a pipe nipple (23) of the compressed air supply pipe (24), and wherein the connecting element has a collar (33) which bears in a sealing manner against the end wall of the basic body.

10. The aeration apparatus as claimed in claim 9, wherein the connecting element (20) is provided with radial bores (31), which connects [sic] its inner space (34) to an air compression groove [sic] (32) taken around its outer circumference.

## Revendications

1. Dispositif d'aération par injection d'air comprimé dans un liquide, en particulier de l'eau usée, muni d'un corps de base tubulaire (1) qui est entouré d'une membrane élastique perforé (4), à travers des perforations de laquelle est injecté l'air comprimé en fines bulles et réparti dans le liquide par une ou plusieurs ouvertures radiales prévues dans le corps de base à l'état actif de la membrane qui, à l'état inactif entoure étroitement le corps de base, de telle façon qu'aucun liquide ne pénètre dans l'espace compris entre la membrane et le corps de base, le dispositif étant muni d'un élément de liaison qui relie un tube d'amenée d'air comprimé (3) au corps de base et supporte ce tube, caractérisé en ce que le corps de base (1) se compose d'un tronçon de tube du commerce, muni d'un élément de fixation et d'au moins une ouverture radiale de passage de l'air (6), un corps de support (2) étant prévu pour servir d'élément de liaison entre le corps de base (1) et le tube d'amenée d'air comprimé (3), ce corps de support (2) étant traversé par une extrémité du tube d'amenée d'air comprimé (3) et venant en contact avec le corps de base par son extrémité'opposée au tube d'amenée pour supporter ce dernier et assurer l'étanchéité au liquide, et en ce que l'élément de liaison (2) comporte au moins une conduite d'alimentation en air (7) s'étendant axialement et qui amène l'air comprimé depuis l'intérieur des éléments (3) d'amenée d'air comprimé et de support jusqu'aux ouvertures radiales (6) de sortie d'air du corps de base (1).

2. Dispositif d'aération selon la revendication 1, caractérisé en ce que l'élément de liaison (2) est réalisé sous la forme d'un corps creux ouvert, qui relie entre elles les chambres d'écoulement (11) du corps de base (1) disposées par paires et qui forment une chambre d'écoulement homogène ouverte sur deux côtés et susceptible d'être parcourue par le liquide.

3. Dispositif d'aération selon la revendication 1 ou 2, caractérisé en ce que l'élément de liaison (2) contient une bague d'étanchéité (9) insérée dans une rainure annulaire pour assurer l'étanchéité à l'air comprimé à l'égard de la zone de liquide qui correspond avec une paroi cylindrique du corps de base (1) suffisamment longue dans la direction axiale, de telle sorte que l'étanchéité soit maintenue, pour n'importe quelle profondeur de vissage de l'élément de liaison (2) dans le corps de base (1).

4. Dispositif d'aération selon l'une des revendications 1 à 3, caractérisé en ce que la membrane élastique (4) qui entoure le corps de base (1), n'est pas perforée dans la zone des ouvertures radiales de sortie d'air du corps de base (1).

5. Dispositif d'aération selon la revendication 4, caractérisé en ce que les zones perforées et non perforées de la membrane élastique sont disposées les unes derrière les autres dans la direction axiale.

6. Dispositif d'aération selon l'une des revendications 2 à 5, caractérisé en ce que, la partie d'amenée d'air comprimé de l'élément de liaison (2) est disposée concentriquement à la partie susceptible d'être submergée de cet élément.

7. Dispositif d'aération selon l'une des revendications 2 à 6, caractérisé en ce que le volume total susceptible d'être immergé de deux corps de base (1) disposés par paires et de leurs éléments de liaison (2) forment, par rapport aux volumes de cet agencement non susceptibles d'être immergés, un quotient supérieur à 1,3.

8. Dispositif d'aération selon l'une des revendications 1 à 6, caractérisé en ce que, pour réaliser la fixation unilatérale du corps de base (1) sur l'élément (3) de support et d'amenée d'air comprimé, l'élément de liaison (2a) est fixé à l'aide d'un flasque ou d'une bride (20) du côté de l'élément de support (3) tourné vers le corps de base.

9. Dispositif d'aération selon l'une des revendications 1 à 8, caractérisé en ce que l'élément de liaison (20) est conformé comme un manchon fermé unilatéralement et est muni également d'un filetage extérieur (29) permettant de le visser dans le corps de base (1) et également d'un filetage intérieur (30) pour le visser sur un embout de tube (23) du tube d'amenée d'air comprimé (24), et en ce que l'élément de liaison comporte une bride (33) qui est disposée, en position d'étanchéité, contre la paroi frontale du corps de base.

10. Dispositif d'aération selon la revendication 9, caractérisé en ce que l'élément de liaison (20) est muni d'alésages radiaux (31) qui mettent en communication son espace intérieur (34) avec une rainure d'air comprimé (32) disposée sur sa périphérie.
